# EUROPÄISCHE PATENTSCHRIFT

(11) **EP 2 368 049 B1**
(45) Veröffentlichungstag und Bekanntmachung des Hinweises auf die Patenterteilung: **26.10.2016**
(21) Anmeldenummer: 09763935.5
(22) Anmeldetag: 27.11.2009
(51) Int. Cl.: F16B 5/00, F16B 12/20, F16B 5/01, F16B 11/00

(54) **BESCHLAG**
FITTING
FERRURE

(30) Priorität: 27.11.2008 DE 202008015728 U
(43) Veröffentlichungstag der Anmeldung: 28.09.2011
(73) Patentinhaber: Hettich-Heinze GmbH & Co. KG, 32139 Spenge (DE)
(72) Erfinder: NOLTE, Frank, 49086 Osnabrück (DE); POPPENBORG, Norbert, 32105 Bad Salzuflen (DE)
(74) Vertreter: Dantz, Jan Henning
(86) Internationale Anmeldenummer: PCT/EP2009/065991
(87) Internationale Veröffentlichungsnummer: WO 2010/060991

(56) Entgegenhaltungen:
- WO-A1-2009/059896
- DE-U1-202008 002 540

## Beschreibung

Die vorliegende Erfindung betrifft einen Beschlag, insbesondere zur Montage in einer Leichtbauplatte, mit einem Gehäuse, an dem mindestens eine nach außen offene Klebemittelkammer ausgebildet ist, die mit einem im Gehäuse verlaufenden Klebemittelkanal in Verbindung steht, der eine Einlassöffnung zum Anschluss an eine Einspritzdüse für Klebemittel aufweist.

Es ist bekannt, dass Beschläge bei Leichtbauplatten schlecht zu befestigen sind, da eine mit Hohlräumen versehene Mittelschicht, meist eine Wabenplatte, nicht zur Aufnahme von Kräften geeignet ist. Gerade an den Stirnseiten der Platten ergibt sich das Problem, Beschläge auf effektive Weise mit hoher Festigkeit zu fixieren. Bisher wurden Beschläge an einer Innenseite der Deckplatten angeklebt, um eine Verbindung zwischen dem Beschlag und der stabileren Deckplatte zu erhalten. Solche Klebeverbindungen können in der Qualität stark variieren, gerade wenn Luft zwischen eine Deckplatte und das Klebemittel in einer nach außen offenen Klebemittelkammer gelangt. Dabei besteht das Problem, dass bei einem dickflüssigen Klebemittel ein vollständiges Verteilen des Klebemittels in der Klebemittelkammer nur schlecht erreicht werden kann. Wird ein zu dünnflüssiges Klebemittel gewählt, dann tritt dieses aus dem Klebemittelkanal nach dem Einspritzen wieder aus, so dass die oben genannten Nachteile durch Eintritt von Luft auftreten.

Es ist daher Aufgabe der vorliegenden Erfindung, einen Beschlag für eine Montage in einer Leichtbauplatte zu schaffen, der eine verbesserte Verklebung ermöglicht.

Diese Aufgabe wird mit einem Beschlag mit den Merkmalen des Anspruches 1 gelöst.

Erfindungsgemäß weist der Klebemittelkanal eine Blende mit einem verjüngten Querschnitt auf, so dass der Zugang von der Einlassöffnung des Klebemittelkanals zu der Klebemittelkammer mit einem vergrößerten Strömungswiderstand versehen wird. Dies ermöglicht den Einsatz von Heißkleber, der mit einem gewissen Druck durch den Klebemittelkanal in die Klebemittelkammer eingespritzt werden kann und dann nach dem Beenden des Einspritzvorganges im Bereich der Blende schnell aushärtet, so dass ein Herausfließen des Klebemittels aus dem Klebemittelkanal nahezu vollständig verhindert werden kann. Durch den verengten Querschnitt der Blende kühlt das Klebemittel im Bereich der Blende schneller ab und wird zähflüssig, so dass die Blende als erstes verstopft und die Klebemittelkammer zum Klebemittelkanal verschlossen wird. Dadurch wird das Eintreten von Luft in die Klebemittelkammer verhindert und die Verklebung des Beschlages in der Leichtbauplatte kann mit hoher Qualität erfolgen.

Gemäß einer bevorzugten Ausführungsform ist der Querschnitt der Blende weniger als halb so groß wie der Querschnitt des Klebemittelkanals. Dadurch wird abschnittsweise durch die Verengung ein höherer Strömungswiderstand erzeugt. Durch die große Kontaktfläche zwischen Klebemittel und Blende im Verhältnis zu Volumen des Klebemittels erstarrt das Klebemittel schneller.

Die Klebemittelkammer ist vorzugsweise als länglicher Hohlraum ausgebildet und der Klebemittelkanal erstreckt sich in Längsrichtung der Klebemittelkammer. Dadurch wird erreicht, dass die Klebemittelkammer beabstandet von einer Stirnseite der Leichtbauplatte angeordnet ist, um ein Ausreißen der Klebemittelkammer und ein Austreten von Klebemittel im Bereich der Stirnseite der Leichtbauplatte zu vermeiden.

Eine Anordnung der Klebemittelkammer parallel zur Stirnkante der Leichtbauplatte ist ebenfalls denkbar. Auch hier kann die Zuführung von Klebemittel über die zuvor erwähnten Klebemittelkanäle erfolgen.

Für eine gute Verteilung des Klebemittels mündet der Klebemittelkanal vorzugsweise in einem mittleren Bereicht der Klebemittelkammer.

Der Klebemittelkanal weist für eine ausreichende Zuführung von Klebemittel vorzugsweise einen Durchmesser zwischen 2 bis 4 mm, insbesondere 2,5 bis 3,5 mm auf. Die Blende kann einen verringerten Durchmesser zwischen 0,8 bis 2,3 mm, insbesondere 1,2 bis 1,8 mm aufweisen. Damit ein sicheres Verschließen der Blende nach dem Zuführen von Klebemittel gewährleistet ist, kann die Blende eine Länge von mindestens 2 mm, vorzugsweise mindestens 4 mm aufweisen. Dann kühlt das erste Klebemittel im Bereich der Blende schnell ab und verschließt diese. Die Durchmesser der Klebemittelkanäle sowie der Blende können mit der Viskosität des verwendeten Klebemittels variiert werden.

Damit der Beschlag mit einer ausreichenden Festigkeit in einer Leichtbauplatte festgelegt werden kann, weist die Klebemittelkammer vorzugsweise eine Länge von mehr als 2 cm, insbesondere mehr als 3 cm auf. Je nach festzulegendem Bauteil kann die Klebemittelkammer auch eine Länge von beispielsweise 4 bis 10 cm besitzen, so dass hohe Kräfte übertragen werden können. Die Breite der Klebemittelkammer kann zwischen 0,4 cm und 2 cm betragen. Das Volumen der Klebemittelkammer kann dabei mindestens 1 cm³, vorzugsweise mindestens 1,5 bis 3 cm³ aufweisen. Durch das große Volumen der Klebemittelkammer im Verhältnis zum Klebemittelkanal und zur Blenden bleibt das Klebemittel lange fließfähig. Im Verhältnis zum Volumen des Klebemittels ist die Kontaktfläche gering, somit kann das Klebemittel langsam abreagieren bzw. abkühlen. Dadurch kann das Klebemittel vor dem Erstarren das gesamte Volumen der Klebemittelkammer ausfüllen. Es entsteht ein Klebemittelpfropfen nahezu ohne Lunker, der zu einer hochfesten Verbindung zwischen Beschlag und Leichtbauplatte führt.

An den Stellen wo das Klebemittel schnell erstarren bzw. abreagieren soll sind kleine Volumina bzw. kleine Querschnitte vorgesehen insbesondere im Bereich der Blende. Somit verhindert der sich dort nach Rückzug der Klebemittelzuführung schnell bildende Pfropfen einen Klebemittelrückfluss durch den Klebemittelkanal. Zwischen Beschlag und Deckschicht wird bewusst ein geringer Spalt vorgesehen, beim Befüllen der Klebemittelkammer kann dort Luft austreten, bis Klebemittel den Spalt durchtritt. Dieses Klebemittel wird kurz nach dem Durchtreten des Spaltes erstarren bzw. abreagieren und eine Blockade für nachfolgendes Klebemittel bilden. Somit ist dieses nachfolgende Klebemittel genötigt weiter in die Klebemittelkammer einzudringen und somit nahezu vollständig die zuvor vorhandene Luft zu verdrängen. Wenn der Spalt komplett geschlossen ist, ist das Volumen der Klebemittelkammer mit Klebemittel gefüllt. Wenn weiter Klebemittel über die Zuführvorrichtung wie z.B. den Greifer zugeführt wird bildet sich ein Rückstau und der Druck im System steigt an. Dieser Druckanstieg kann über Drucksensoren in der Zuführvorrichtung detektiert werden. Der Druckanstieg ist ein Indiz für den Füllgrad der jeweiligen Klebemittelkammer. Somit kann auch bei Klebemittelkammern mit verschiedenen Volumina ein sicheres Befüllen der jeweiligen Klebemittelkammer gewährleistet werden. Nach Überschreiten eines Druckgrenzwertes kann die Klebemittelzuführung beendet werden. Nach dem Entfernen der Zuführvorrichtung bildet sich der zuvor beschriebene Klebemittelpfropfen in der Blende, somit kann kein Klebemittel aus der Klebemittelkammer zurückfließen. Denkbar ist auch, dass der Beschlag vor dem Einsetzen erhitzt wird um das Abreagieren des Klebemittels zu beschleunigen. Auch ist denkbar nach dem Einsetzten des Beschlages den Beschlag und / oder die Leichtbauplatte zu erhitzen um das Abreagieren des Klebemittels zu beschleunigen. Das übrige Klebemittel kann über einen längeren Zeitraum abreagieren, abkühlen bzw. aushärten. In den meisten Fällen wird die volle Belastungsfähigkeit des Beschlages bei der Nutzung des Möbels erforderlich.

Um die Anhaftung des Klebemittels an den Wandungen der Klebemittelkammer zu erhöhen, kann der Beschlag mit einem Haftvermittler beschichtet sein. Weiterhin kann die Wandung der Klebemittelkammer eine Struktur zur Erhöhung der Kontaktfläche aufweisen um eine intensivere Verbindung zwischen Klebemittel und Klebekammer zu ermöglichen. Die Struktur kann durch Profilierungen, beispielsweise in Form von Rippen odeer Rillen gebildet sein.

Über einen Klebemittelkanal können mehrere Klebemittelkammern befüllt werden. Die Blende zur Rückflussverhinderung kann dabei vor oder nach der Aufteilung der Klebemittelströme angeordnet sein.

Die Abdichtung der Düse bei der Zuführung des Klebemittels kann außen am Beschlag oder am Umfang des Klebemittelkanals erfolgen. Die Abdichtung bewirkt, dass das Klebemittel blasenfrei zugeführt werden kann und die Beschlagssichtseite nicht verunreinigen kann.

Durch eine Abstufung oder konische Gestaltung des Klebemittelkanals können Düsen unterschiedlicher Durchmesser eingesetzt werden. Weiterhin wird eine Beschädigung der Düse vermieden. Insbesondere die konische Ausgestaltung des Klebemittelkanals hilft Toleranzen zwischen Düse und Beschlag auszugleichen.

Die Klebemittelkammern können im Sinne einer Kaskade mit Unterkammern zur Fließverzögerung ausgeführt sein, die durch einzelne Wandabschnitt teilweise voneinander getrennt sind. Insbesondere bei senkrechter Montagerichtung der Beschläge wird ein zu schnelles Fließen des Klebemittels unterbunden.

Weiterhin kann zwischen Blende und Klebemittelkammer eine Zwischenkammer, insbesondere zur Wärmespeicherung, angeordnet sein. Durch Wärmespeicherung kann ein gezieltes, langsames Aushärten von Heißkleber erreicht werden.

Vorzugsweise sind die Wände der Klebemittelkammer so angeordnet, dass sie beabstandet zu einer Außenwand des Beschlags positioniert sind. Die Außenwand des Beschlags ist durch die Wandelemente gebildet, die nach Einbau in die Leichtbauplatte im sichtbaren Bereich liegen, beispielsweise die Frontseite, wenn der Beschlag an einer Stirnseite der Leichtbauplatte montiert wird. Dann bildet diese Frontseite vorzugsweise nicht zusätzlich auch eine Wand der Klebemittelkammer aus, sondern ist beabstandet angeordnet. Dadurch wird vermieden, dass bei Einsatz von heißen Klebemitteln eine Verformung der sichtbaren Frontseite durch Erweichung des Kunststoffmaterials des Beschlags auftritt. Dabei können die Wände der Klebemittelkammer über einen Luftspalt von der Außenwand des Beschlags beabstandet sein.

Gemäß einer weiteren Ausgestaltung sind an der Außenwand vorzugsweise Mittel vorgesehen, um den Füllstand der Klebemittelkammer zu erfassen. Beispielsweise kann ein Sichtfenster an der Außenwand angeordnet sein, um die Befüllung der Klebemittelkammer visuell überprüfen zu können. Alternativ können auch Mittel vorgesehen sein, die sich bei höheren Temperaturen verfärben, so dass bei Einsatz von Heißkleber der Füllstand darüber erkennbar wird. Die Indikation des Füllstandes ist auch durch chemische Reaktionen mit verschiedenen Klebemitteln denkbar. Diese Reaktionen können zu einem Farbumschlag führen. Auch andere optische oder akustische Mittel können zur Erfassung eines Füllstandes vorgesehen sein. Dies ermöglicht eine Überprüfung eines vollständigen Befüllens der Klebemittelkammer bei maschineller sowie manueller Befüllung und gewährleistet eine hohe Stabilität der Klebeverbindung. Weiterhin kann durch eine gezielte Verformung z.B. nach dem "Knackfroschprinzip" der Füllstand angezeigt werden. Das Sichtfenster würde von einer konkaven in eine konvexe Gestalt von der Außenseite gesehen, umschlagen.

Erfindungsgemäß wird auch eine Leichtbauplatte bereitgestellt, die zwei äußere Deckplatten und eine Mittelschicht aufweist, wobei an einer Stirnseite mindestens ein erfindungsgemäßer Beschlag verklebt ist. Dadurch können weitere Bauteile an der Leichtbauplatte stabil über den Beschlag befestigt werden Der Beschlag kann dabei so in der Leichtbauplatte angeordnet sein, dass die Wände der Klebemittelkammer nur mit minimalem Spiel an einer Deckplatte der Leichtbauplatte angeordnet sind, beispielsweise sind nur Schlitze zwischen 0,2 bis 0,4 mm vorgesehen, durch die beim Einspritzen des Klebemittels Luft entweichen kann, die aber nur geringfügig Klebemittel durchlassen. Für eine besonders hohe Festigkeit der Klebeverbindung kann die Deckplatte im Bereich der Klebemittelkammer angebohrt oder angefräst sein, so dass sich die Klebemittelkammer von Innen in die Deckplatte erstreckt. Gerade bei einem kreisförmigen Bohrkanal können dadurch besonders hohe Kräfte übertragen werden.

Die Verwendung des Beschlags ist nicht auf Leichtbauplatten beschränkt, er kann auch in Platten anderer Materialien mit entsprechender Dicke zur Aufnahme des Beschlages eingesetzt werden, wie z.B. Spanplatten.

Die Erfindung wird nachfolgend anhand mehrerer Ausführungsbeispiele mit Bezug auf die beigefügten Zeichnungen beschrieben. Es zeigen:
- Figuren 1A und 1B: zwei Ansichten einer Leichtbauplatte mit einem erfindungsgemäßen Beschlag bei der Montage;
- Figur 2: eine geschnittene perspektivische Ansicht des Beschlages der Figur 1 ;
- Figuren 3A bis 3D: mehrere Ansichten der Leichtbauplatte mit montiertem Beschlag;
- Figuren 4A bis 4C: mehrere Ansichten einer Leichtbauplatte mit einem montierten Beschlag in einer zweiten Ausführungsform;
- Figuren 5A bis 6C: mehrere Ansichten einer Leichtbauplatte mit einem Beschlag gemäß einer dritten Ausführungsform;
- Figuren 7A bis 7C: mehrere Ansichten eines Greifers für einen Beschlag zur Montage an einer Leichtbauplatte;
- Figuren 8A bis 8C: mehrere Ansichten einer Leichtbauplatte mit einem weiteren Ausführungsbeispiel eines erfindungsgemäßen Beschlages;
- Figuren 9A und 9B: zwei perspektivische Ansichten des Beschlages der Figuren 8;
- Figuren 10 bis 12: mehrere Ansichten des Beschlages der Figuren 9A und 9B,
- Figuren 13 bis 15: mehrere Ansichten des Beschlages der Figuren 9A und 9B in der montierten Position;
- Figur 16: eine perspektivische Ansicht eines weiteren Beschlags bei der Montage, und
- Figuren 17 bis 19: mehrere geschnittene Ansichten des Beschlages der Figur 16.

Eine Leichtbauplatte 1 umfasst zwei äußere Deckplatten 2 und 4, zwischen denen eine Mittelschicht 3 mit Hohlräumen angeordnet ist, die beispielsweise als Wabenplatte aus Pappe oder Kunststoff hergestellt ist. Die Deckplatten 2 und 4 können ebenfalls aus Pappe oder Kunststoff hergestellt sein und besitzen eine höhere Festigkeit als die Mittelschicht 3. Die Mittelschicht 3 der Leichtbauplatte 1 weicht in ihren chemischen und/oder physikalischen Eigenschaften von den mindesten zwei Deckplatten 2 und 4 ab. Derzeit sind auch Mittelschichten 3 bekannt, die aus leichten Hölzern wie z.B. Balsa bestehen. Eine weitere Möglichkeit ist, die Mittelschicht 3 aus Fasermaterialien wie z.B. Hanf- oder Strohfasern aufzubauen. Weiterhin können in der Mittelschicht 3 Hohlräume wie z.B. bei Strangpress-Röhrenspanplatten oder Wabenplatten erzeugt werden. Ferner kann die Mittelschicht 3 als Schaum, insbesondere als Schaumkernplatte aufgebildet sein. Die Deckplatten 2 und 4 der Leichtbauplatte 1 sind darauf ausgelegt insbesondere Zug- und Druckbelastungen standzuhalten, die Mittelschicht 3 hält bevorzugt Druckbelastungen stand. Die mechanischen Bedingungen sind mit einem Doppel-T-Träger vergleichbar. Die Mittelschicht einer Leichtbauplatte wirkt sich weniger auf das Widerstandsmoment der Leichtbauplatte aus, als die Deckplatten.

Um einen Beschlag 10 an einer Stirnseite 6 der Leichtbauplatte 1 zu befestigen, ist eine Bohrung 5 an der Stirnseite 6 eingebracht, die einen kreisförmigen Querschnitt aufweist. Die Bohrung 5 ist dabei so ausgestaltet, dass mindestens ein Teil des Bohrkanals in einer der äußeren Deckplatten 2 und 4 an der Innenseite ausgebildet ist, so dass sich mindestens ein gewölbter Wandabschnitt 8 an einer der Deckplatten 2 und 4 ausbildet. Die Deckplatten 2 und 4 weisen meist eine Dicke zwischen 1 mm bis 10 mm, insbesondere 2 mm bis 4 mm auf, so dass der Bohrkanal in die Deckplatte 2 zwischen 0,2 mm bis 5 mm, insbesondere 0,2 mm bis 1,5 mm, eingreift.

Ein Beschlag 10 aus Kunststoff oder Metall umfasst ein Gehäuse mit einem ringförmigen Abschnitt 11, der im wesentlichen passgenau in die durch die Bohrung gebildete Öffnung 5 einfügbar ist. An den Abschnitt 11 schließt sich ein Vorsprung 12 an, der in die Mittelschicht 3 einfügbar ist. An dem Vorsprung 12 sind zwei längliche Klebemittelkammern 13 ausgebildet, die an gegenüberliegenden Längsseiten parallel zur Bohrrichtung durch Wände 14 begrenzt ist.

Endseitig an dem Vorsprung 12 ist eine Hülse 15 ausgebildet, die nach dem Einfügen des Beschlags 10 in die Bohrung 5 mit einer Öffnung 7 fluchtet, die in die Deckplatte 2 eingebracht ist. Der Beschlag weist ferner ein Rohr 16 auf, in das ein metallisches Beschlagsteil 17 einfügbar ist. Das metallische Beschlagsteil 17 umfasst einen Kopf 22, der in Eingriff mit einer Kurvenführung 21 einer Drehscheibe 20 bringbar ist, um eine klemmende Verbindung zwischen einem mit dem Beschlagsteil 17 gekoppelten Element und der Leichtbauplatte 1 herzustellen.

Damit der Beschlag 10 mit ausreichender Festigkeit in der Leichtbauplatte 1 festgelegt ist, weist dieser innerhalb des Gehäuserings 11 zwei Klebemittelkanäle 18 auf, die sich innerhalb des Beschlages 10 im Querschnitt verjüngen, so dass jeweils eine Blende 19 ausgebildet ist, bevor sich der jeweilige Klebemittelkanal zu der zu ihm gehörigen Klebemittelkammer 13 hin öffnet. Die Klebemittelkammern 13 sind nach außen durch den gewölbten Wandabschnitt 8 an den Deckplatten 2 bzw. 4 sowie nach innen durch den Beschlag 10, insbesondere die Wände 14 begrenzt. An den Stirnseiten der länglichen Klebemittelkammern 13 sind Wandabschnitte 27 und 28 an dem Beschlag 10 ausgebildet, so dass die Klebemittelkammern 13 weitgehend abgedichtet sind und ein eingespritztes Klebemittel nur geringfügig aus der Klebemittelkammer 13 austritt. Eine geringfügige Leckage ist an dieser Stelle erwünscht und dient dem Austritt der Luft beim Einspritzen des Klebemittels sowie dem Ausgleich von volumenwirksamen Toleranzen durch geringen Klebemittelaustritt und somit dem sicheren Ausfüllen der Klebemittelkammern 13. An den Stellen wo das Klebemittel schnell erstarren bzw. abreagieren soll sind kleine Volumina bzw. kleine Querschnitte vorgesehen insbesondere im Bereich der Blende 19. Somit verhindert der sich dort nach Rückzug der Klebemittelzuführung schnell bildende Pfropfen einen Klebemittelrückfluss durch den Klebemittelkanal.

Auf der nach außen gerichteten Seite weist der Beschlag 10 ferner Markierungen 25 aus, um die Einbaurichtung festzulegen. Ferner sind zwei Stege 26 ausgebildet, die von einem hier nicht dargestellten Greifer gegriffen werden können, um ein Einfügen des Beschlages 10 in automatisierter Form zu erleichtern.

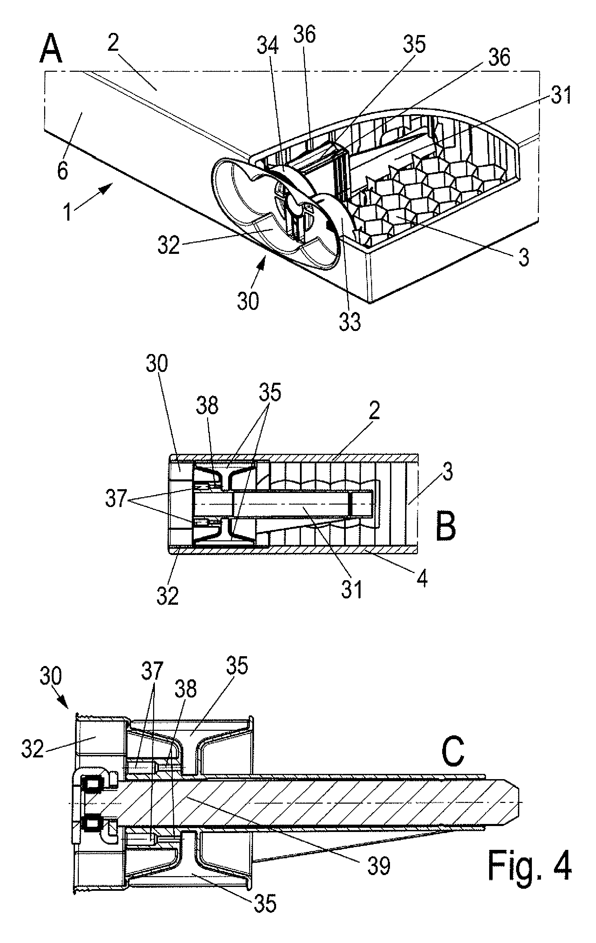

In den Figuren 4A bis 4C ist eine zweite Ausführungsform eines Beschlags 30 dargestellt, der an einer Leichtbauplatte 1 mit zwei äußeren Deckplatten 2 und 4 und einer dazwischen angeordneten Mittelschicht 3 befestigt wird. Der Beschlag 30 umfasst ein topfförmiges Gehäuse 32 mit zwei seitlichen Töpfen 33, die einen geringfügig kleineren Durchmesser aufweisen als ein mittlerer Topf 34. Die Töpfe 33 und 34 überschneiden sich und sind integral miteinander ausgebildet. An dem mittleren Topf 34 ist ähnlich wie bei dem ersten Ausführungsbeispiel ein Vorsprung ausgebildet, der an gegenüberliegenden Seiten Wandabschnitte 36 zur Ausbildung von mindestens einer Klebemittelkammer 35 aufweist. Ferner ist eine rohrförmige Verlängerung 31 vorgesehen, in die ein Beschlagteil 39 zur Festlegung eines Bauteils einfügbar ist.

Um den Beschlag 30 an einer Stirnseite 6 der Leichtbauplatte 1 zu befestigen, werden an der Stirnseite 6 drei Bohrungen hergestellt, wobei die mittlere Bohrung einen etwas größeren Durchmesser hat, um den mittleren Topf 34 aufzuhemmen, während die randseitigen Bohrungen die etwas kleineren seitlichen Töpfe 33 aufnehmen. Die Befestigung des Beschlages 30 erfolgt über Einspritzen von Klebemittel durch zwei Klebemittelkanäle 37, die über jeweils eine Blende 38 von den Klebemittelkammern 35 getrennt sind. Durch die Blende 38 wird verhindert, dass einmal eingespritztes Klebemittel aus der Klebemittelkammer 35 in nennenswertem Umfang in den Klebemittelkanal 37 zurückfließt, wenn eine Klebemitteldüse entfernt wurde. Denn aufgrund des kleineren Querschnittes verstopft die Blende 38 nach dem Einspritzen von Klebemittel schnell.

Im übrigen erfolgt die Befestigung des Beschlages 30 wie bei dem Beschlag 10, wobei es natürlich möglich ist, an einem Beschlag 30 mehr als nur zwei Klebemitteilkammern 35 auszubilden, beispielsweise wenn die randseitigen Gehäusetöpfe 33 ebenfalls einen Vorsprung aufweisen, an dem eine oder mehrere Klebemittelkammern 35 ausgebildet ist.

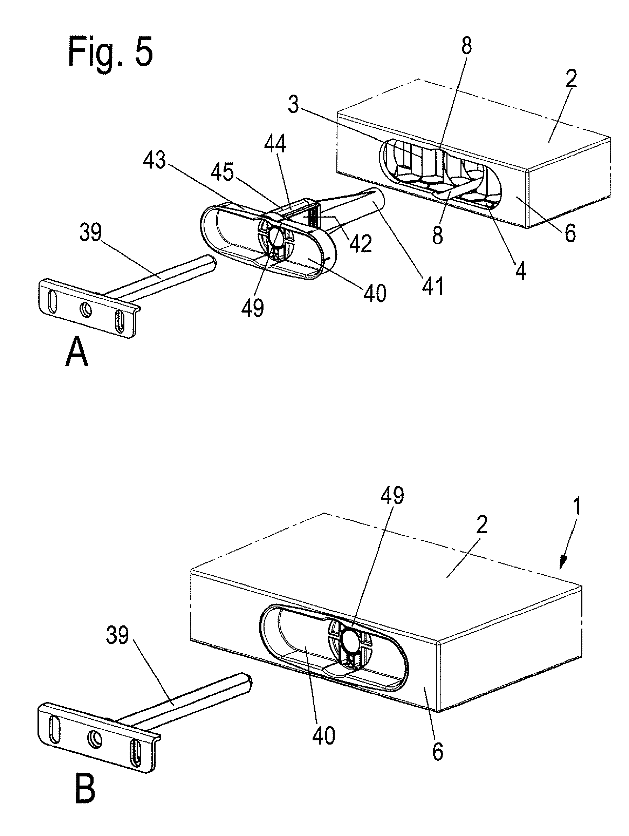

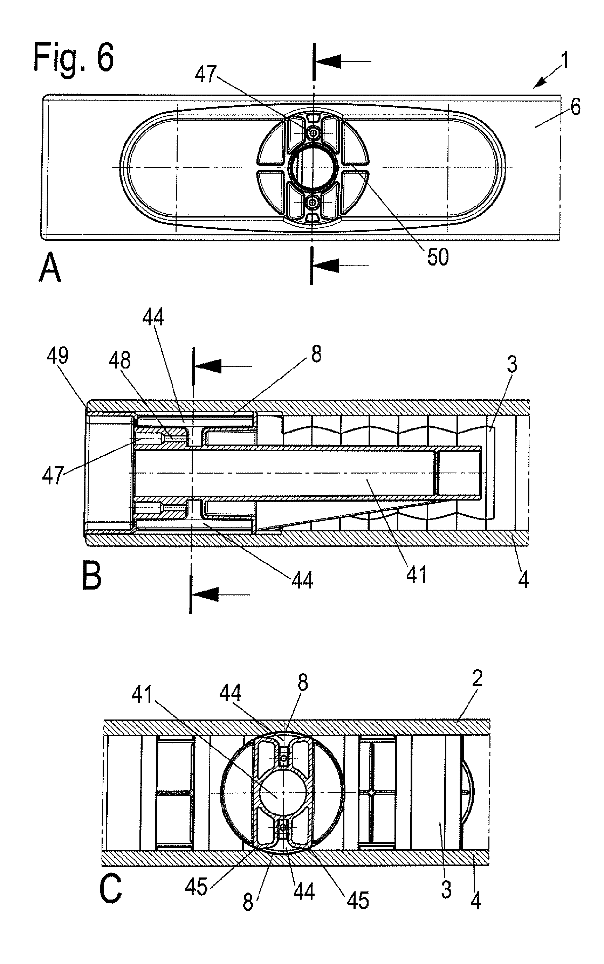

In den Figuren 5A bis 6C ist eine weitere Ausführungsform eines Beschlages 40 dargestellt, der einen länglichen Gehäusetopf 43 aufweist, von dem ein Vorsprung 42 in die Mittelschicht 3 einer Leichtbauplatte 1 hervorsteht. An dem Vorsprung 42 ist ferner ein Rohrelement 41 zur Festlegung eines Beschlagsteils 39 ausgebildet. An dem Vorsprung 42 ist wie bei den vorangegangenen Ausführungsbeispielen mindestens eine Klebemittelkammer 44 ausgebildet, die an gegenüberliegenden Seiten durch Wandabschnitte 45 begrenzt ist. An dem Gehäusetopf 43 ist an der Außenseite ein senkrecht zum Bohrkanal hervorstehender Flansch 49 ausgebildet, der einen Anschlag bei Einstecken des Beschlages 40 ausbildet.

Zur Festlegung des Beschlages 40 wird zunächst eine Bohrung durch ein Bohr-Fräswerkzeug mit kreisförmigem Querschnitt in eine Stirnkante 6 der Leichtbauplatte 1 eingefügt, so dass die Wandabschnitte 8 mit gekrümmter Kontur an den Deckplatten 2 und 4 ausgebildet werden. Anschließend wird die Bohrung durch das Bohr-Fräswerkzeug bearbeitet und länglich erweitert, bis die Kontur der Öffnung an der Stirnseite 6 der Leichtbauplatte mit der Kontur des Gehäusetopfes 43 des Beschlages 40 übereinstimmt. Anschließend wird der Beschlag 40 in die Leichtbauplatte 1 eingesteckt, bis der Flansch 49 an der Stirnseite 6 der Leichtbauplatte 1 anschlägt.

Ferner wird Klebemittel über zwei Klebemittelkanäle 47 mit je einer Blende 48 in den Beschlag 40 eingespritzt, damit das Klebemittel sich in der Klebemittelkammer 44 an gegenüberliegenden Seiten des Beschlages 40 verteilen kann und eine feste Verbindung zwischen dem Beschlag 40 und den Deckplatten 2 und 4 herstellt, wie dies schon bei den vorangegangenen Ausführungsbeispielen beschrieben wurde.

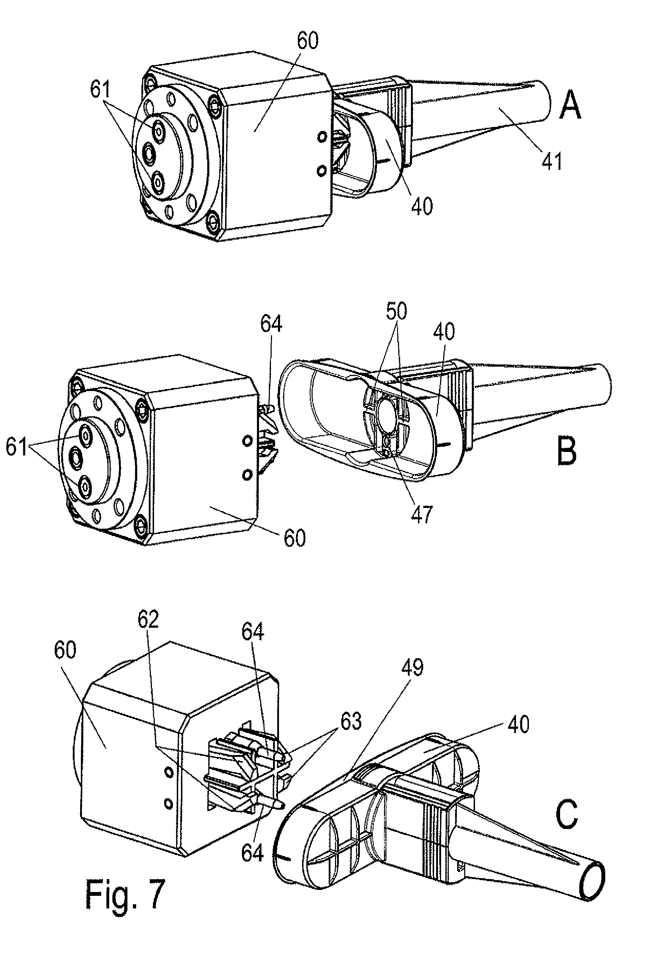

In den Figuren 7A bis 7C ist ein Greifer zur automatisierten Montage eines Beschlages 40 an einer Leichtbauplatte 1 dargestellt. Der Greifer 60 umfasst Anschlüsse 61 für eine Klebemittelzuführung und weitere Anschlüsse für Steuerleitungen. Der Greifer 60 umfasst zwei Paare bewegbarer Greiferbacken 62 und 63, die jeweils einen im Gehäusetopf 40 angeordneten Steg 50 greifen können. Dabei ist an gegenüberliegenden Seiten des Rohres 41 jeweils ein Steg 50 angeordnet. Der Beschlag 40 kann dabei Markierungen oder andere Kennzeichnungsmittel aufweisen, damit der Greifer 60 eine exakte Ausrichtung vornehmen kann, um den Beschlag 40 an den Stegen 50 zu greifen. Zwischen den Paaren von Greifbacken 62 und 63 sind zwei Klebemitteldüsen 64 vorgesehen, die bei entsprechender Ausrichtung des Greifers 60 in die Klebemittelkanäle 47 an dem Beschlag 40 eingefügt werden.

Die Montage der Beschläge 10, 30 oder 40 erfolgt insbesondere in einem automatisierten Verfahren mittels eines Greifers 60. Zunächst wird an einer Leichtbauplatte eine Bohrung eingebracht, wobei der Durchmesser der Bohrung so groß ist, dass die Bohrung die Deckplatten 2 und 4 teilweise anbohrt, so dass sich ein gerundeter Wandabschnitt 8 an den Deckplatten 2 und 4 ausbildet. Anschließend wird eine Stirnseite 6 der Leichtbauplatte wahlweise so belassen oder nachbearbeitet, wahlweise über Fräsen oder Bohren, bis die Öffnung an der Stirnseite 6 der Kontur eines Gehäuserings 11 oder eines Gehäusetopfes 33, 34 oder 43 entspricht. Anschließend wird ein Beschlag 10, 30 oder 40 aus einem Magazin über einen Greifer 60 gegriffen und dabei im Wesentlichen gleichzeitig die Klebemitteldüse 64 in einen Klebemittelkanal eingefügt. Anschließend wird der Beschlag 10, 30 oder 40 in die Leichtbauplatte eingefügt, wobei die Wandabschnitte 14, 36 und 45 im Wesentlichen formschlüssig an der Deckplatte 2 oder 4 anliegen und somit eine Begrenzung für eine Klebemittelkammer 15, 35 oder 44 ausbilden.

Anschließend wird ein Klebemittel, vorzugsweise Heißkleber, bei einer Temperatur zwischen 80 ° C und 180 ° C in die Klebemittelkammer 15, 35 oder 44 eingespritzt. Das Klebemittel kann dann aushärten und die Klebemitteldüse 64 an dem Greifer 64 wird aus den Klebemittelkanälen abgezogen. Aufgrund der Anordnung einer Blende 19, 38 oder 48 an jedem Klebemittelkanal 18, 37 und 47 wird ein Zurückfließen des Klebemittels in nennenswertem Umfang vermieden. Nach Aushärten des Klebemittels ist eine stabile Verbindung zwischen dem Beschlag 10, 30 oder 40 und der Leichtbauplatte 1 hergestellt, wobei das Klebemittel an der gerundeten Kontur der Wand 8 anliegt, so dass Kräfte in unterschiedliche Richtungen zwischen dem Beschlag 10, 30 oder 40 auf die Deckplatten 2 und 4 übertragen werden können.

Statt Heißkleber können natürlich auch andere Klebemittel zum Einsatz kommen. Zudem kann die Klebemittelkammer statt linear länglich auch T-förmig, doppel-T-förmig, L-förmig oder mäanderförmig ausgebildet sein. Die Form und die Funktion der Beschläge 10, 30 und 40 kann in weiten Bereichen frei gewählt werden. Die Beschläge 10, 30 und 40 weisen lediglich eine Begrenzung für eine Klebemittelkammer auf, um eine stabile Befestigung des Beschlages 10, 30 oder 40 in einer Leichtbauplatte 1 zu gewährleisten.

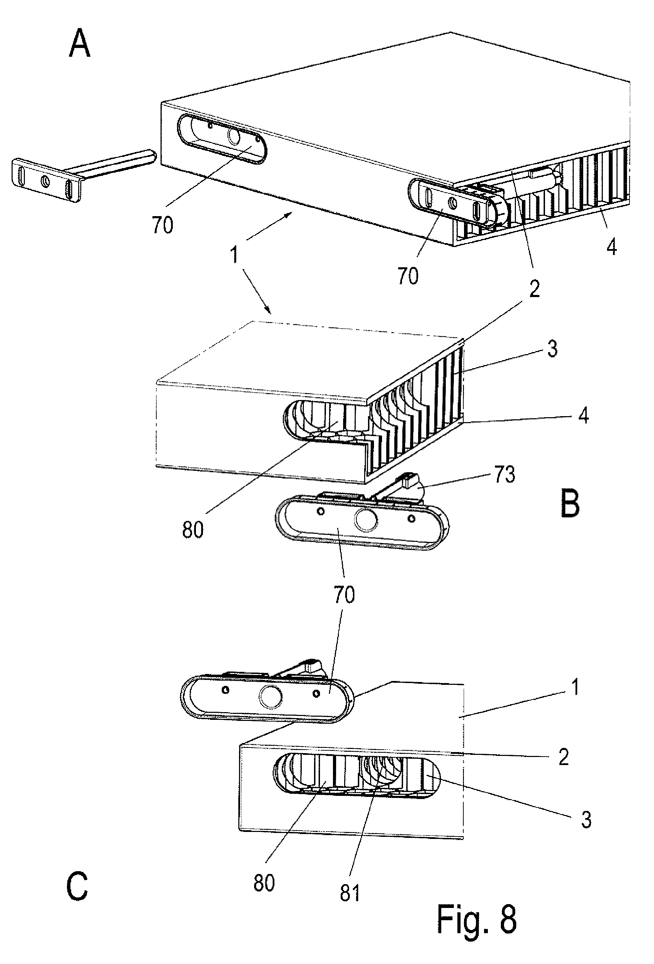

In den Figuren 8A bis 8C ist ein weiteres Ausführungsbeispiel einer Leichtbauplatte 1 gezeigt, in die ein erfindungsgemäßer Beschlag 70 eingesetzt wird. Die Leichtbauplatte umfasst zwei äußere Deckplatten 2 und 4 und eine Mittelschicht 3. Bei diesem Ausführungsbeispiel ist der Beschlag 70 nur mit der oberen Deckplatte 2 verklebt, während an der Unterseite keine Verklebung mit der Deckplatte 4 erfolgt. Der Beschlag 70 wird in eine längliche topfförmige Aufnahme 80 an einer Stirnseite der Leichtbauplatte 1 eingefügt, wobei mittig an dem Beschlag 70 ein hervorstehender Rohrabschnitt 73 ausgebildet ist, der in eine Bohrung 81 in der Mittelschicht 3 eingefügt ist. Die Aufnahme 80 ist dabei beabstandet von der unteren Deckplatte 4 angeordnet.

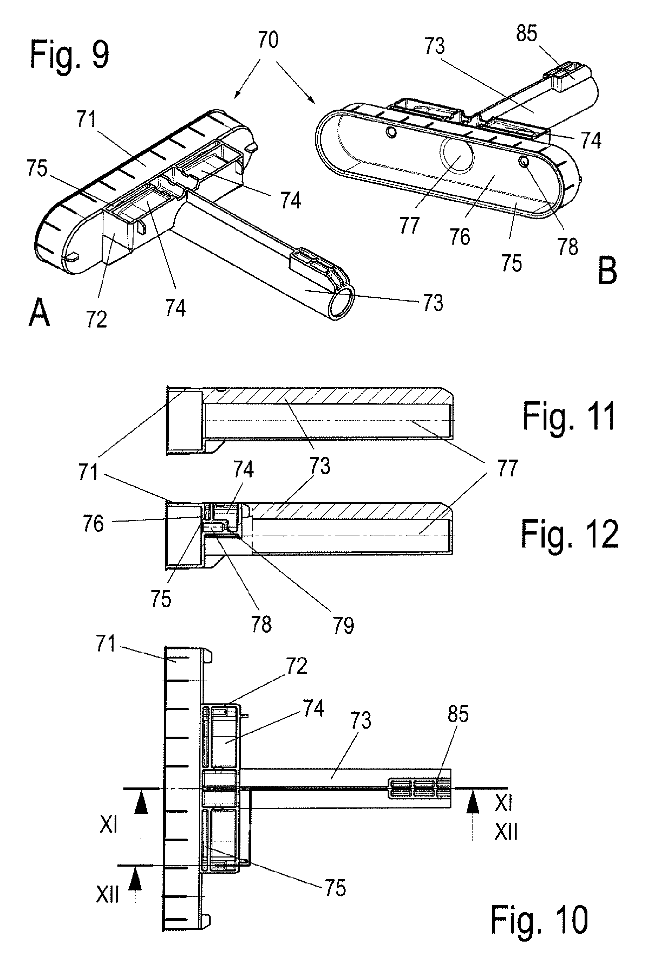

In den Figuren 9A und 9B ist der Beschlag 70 gezeigt, der ein topfförmiges Außenteil 71, ein Mittelteil 72 und den Rohrabschnitt 73 umfasst. An dem Mittelabschnitt 72 sind nach oben offene Klebemittelkammern 74 ausgebildet, die umlaufend durch Seitenwände begrenzt sind. Die Klebemittelkammern 74 sind nach oben offen, damit der Beschlag 70 an der oberen Deckplatte verklebt werden kann.

Die Seitenwände der Klebemittelkammer 74 sind über einen mit Luft gefüllten Zwischenraum 75 von einem Boden 76 an dem Außenteil 71 beabstandet angeordnet. Der Boden 76 wird nach Montage des Beschlages 70 an einer Stirnseite einer Leichtbauplatte 1 zu einer Außenwand im sichtbaren Bereich. Um eine mögliche Verformung des Bodens 76 bei einer Befüllung der Klebemittelkammer 74 mit heißem Klebstoff zu vermeiden, dient der mit Luft gefüllte Zwischenraum 75 zur Wärmeisolation.

Wie in den Figuren 10 bis 12 gezeigt ist, umfasst der Beschlag 70 in dem Rohrabschnitt 73 eine Hohlkammer 77 zum Einfügen eines weiteren Beschlagsteils. Am Ende des Rohrabschnittes 73 ist ein Vorsprung 85 ausgebildet, der an der oberen Deckplatte 2 anliegt und den Beschlag 70 bei einer Belastung mit einem Drehmoment abstützt.

An gegenüberliegenden Seiten ist jeweils ein Klebemittelkanal 78 vorgesehen, an dem eine Blende 79 mit verringertem Querschnitt ausgebildet ist. Hinter der Blende 79 kann das Klebemittel in die Klebemittelkammer 74 strömen.

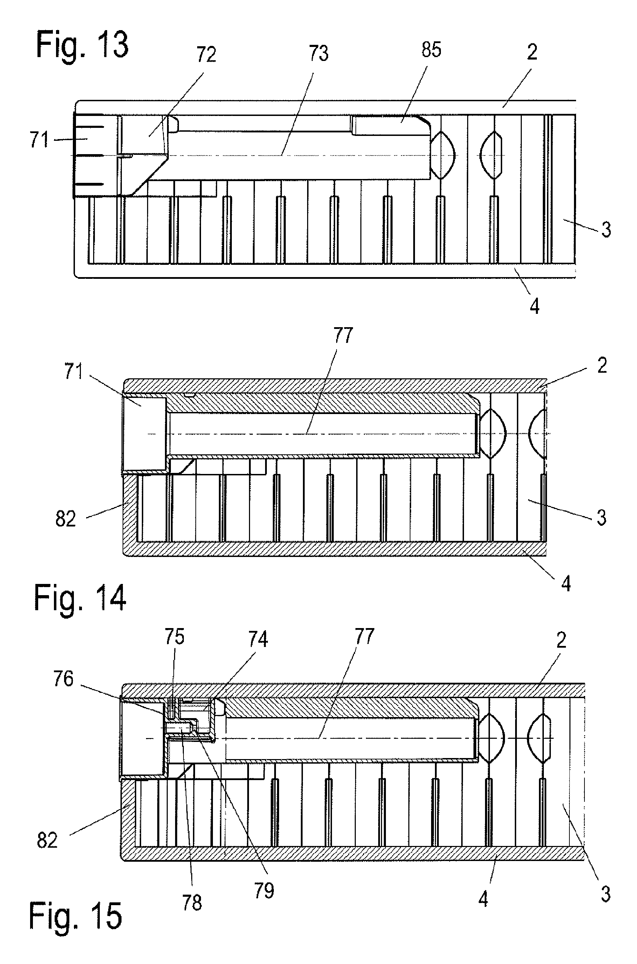

In den Figuren 13 bis 15 ist der Beschlag 70 im eingebauten Zustand dargestellt. Der äußere Abschnitt 71 ist an einer Stirnseite 82 der Leichtbauplatte 1 eingefügt, wobei der Boden 76 des topfförmigen Außenteils 71 nach innen versetzt angeordnet ist. Die Klebemittelkammer 74 ist zu der Deckplatte 2 hin offen ausgebildet, wobei die Wände der Klebemittelkammer 74 an der Deckplatte 2 anliegen oder mit geringem Abstand von weniger als 1 mm, vorzugsweise weniger als 0,6 mm, angeordnet sind, um ein Entweichen von Luft zu ermöglichen, aber ein Entweichen von Klebemittel zu behindern.

Bei dem gezeigten Beschlag 70 sind zwei voneinander beabstandete Klebemittelkammern 74 vorgesehen. Es ist natürlich auch möglich, nur eine Klebemittelkammer 74 oder mehr als zwei Klebemittelkammern 74 vorzusehen. Die rechteckige Form der Klebemittelkammern 74 kann zudem abgeändert werden, um an den jeweiligen Einsatzzweck angepasst zu werden.

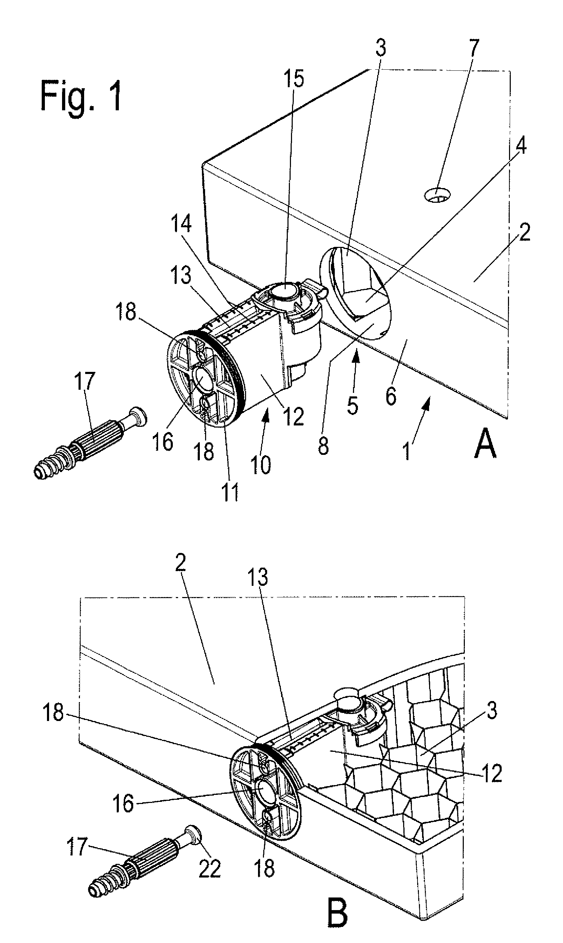

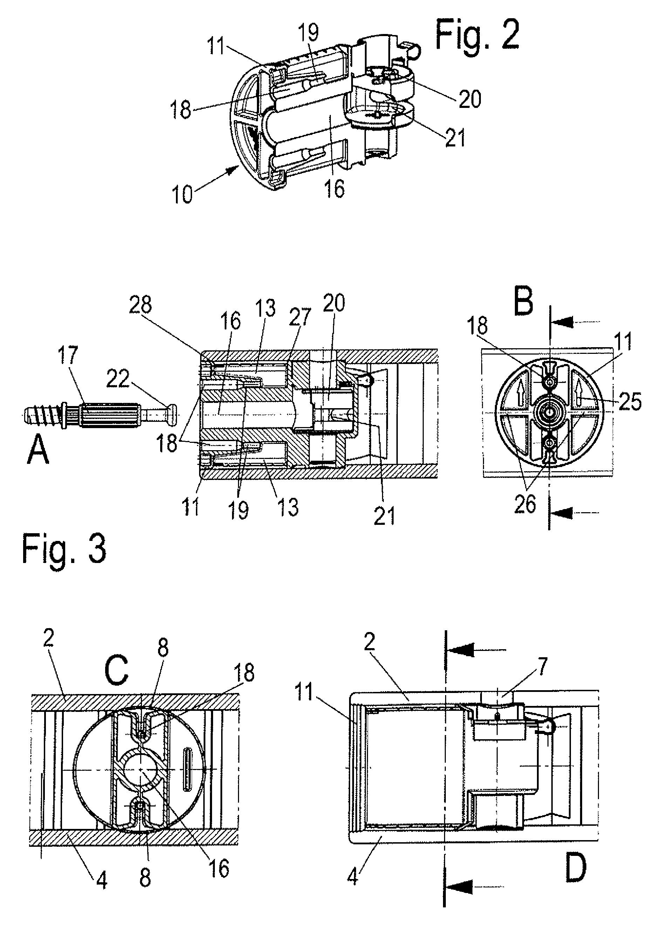

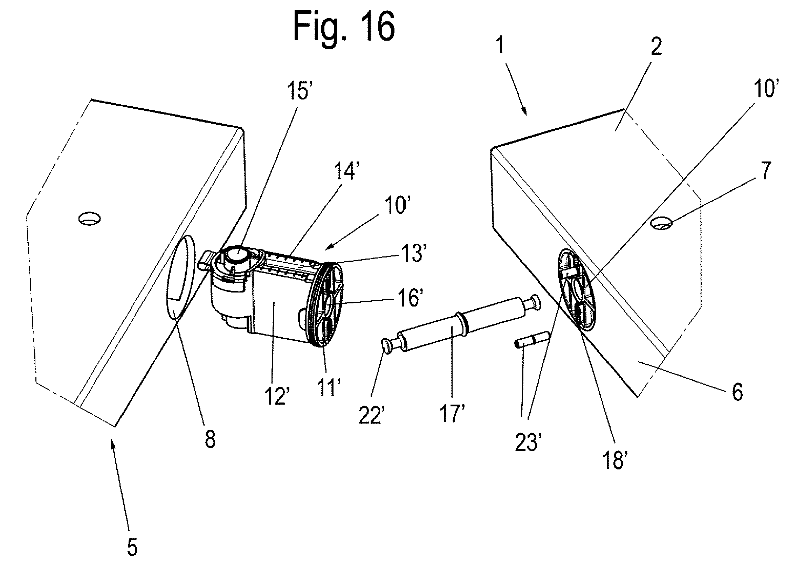

In den Figuren 16 bis 19 ist eine zu Figur 1 bis 3 modifizierte Ausführungsform eines Beschlages 10' gezeigt, der in einer Leichtbauplatte 1 verklebt wird. Für jeden Beschlag 10' ist zwischen den zwei äußeren Deckplatten 2 und 4 in der Mittelschicht 3 an einer Stirnseite 6 eine Bohrung 5 eingebracht, die einen kreisförmigen Querschnitt aufweist und mindestens eine, vorzugsweise beide äußere Deckplatten 2 und 4 an der Innenseite anschneidet, so dass sich mindestens ein gewölbter Wandabschnitt 8' an einer der Deckplatten 2 und 4 ausbildet.

Der Beschlag 10' umfasst ein Gehäuse mit einem äußeren ringförmigen Abschnitt 11', der im wesentlichen passgenau in die durch die Bohrung gebildete Öffnung 5 einfügbar ist. An den Abschnitt 11' schließt sich ein Vorsprung 12' an, an dem zwei längliche Klebemittelkammern 13' ausgebildet sind, die an gegenüberliegenden Längsseiten parallel zur Bohrrichtung durch Wände 14' begrenzt sind.

Endseitig an dem Vorsprung 12' ist eine Hülse 15' ausgebildet, die nach dem Einfügen des Beschlags 10' in die Bohrung 5' mit einer Öffnung 7' in der Deckplatte 2 fluchtet. Parallel zur Bohrrichtung ist in dem Beschlag 10' ein Rohr 16' ausgebildet, das zur Aufnahme eines metallischen Stiftes 17' dient. Der Stift 17' weist an gegenüberliegenden Seiten einen verdickten Kopf 22' auf, der in Eingriff mit einer Kurvenführung 21' eines Spannexzenters 20' bringbar ist, um eine klemmende Verbindung zwischen dem Beschlag 10' und einem weiteren Bauteil oder einer benachbarten Leichtbauplatte 1 mit einem weiteren Beschlag 10' herzustellen.

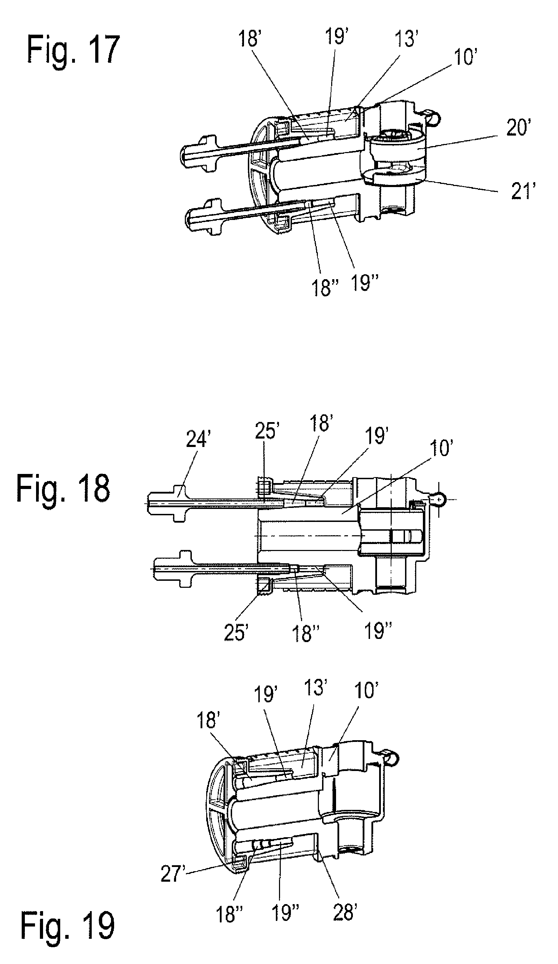

Zum Verkleben des Beschlags 10' sind zwei Klebemittelkanäle 18' vorgesehen, in die jeweils eine Düse 24' mit einer Spitze 25' einfügbar ist (Figuren 17 bis 19). Jeder Klebemittelkanal 18' weist eine Blende 19' mit verjüngtem Querschnitt auf, bevor sich der jeweilige Klebemittelkanal 18' zu der zu ihm gehörigen Klebemittelkammer 13' hin öffnet. Der obere Klebemittelkanal 18' ist dabei zur Blende 19' hin konisch verjüngend ausgebildet, was die Abdichtung der Spitze 25' der Düse 24' beim Einspritzen von Klebemittel erleichtert. Der untere Klebemittelkanal 18" ist mit mehreren Stufen zu der Blende 19' ausgebildet, die einen Übergang zu einem benachbarten Abschnitt mit verringertem Durchmesser ausbilden. Dadurch kann eine Spitze 25' bei Anlage an einer solchen Stufe ebenfalls abgedichtet werden. Zudem bildet die gestufte Ausbildung des Klebemittelkanals 18" einen Anschlag für einen Stift 23' aus, der beispielsweise nach dem Verkleben des Beschlags 10' zur Zentrierung oder Fixierung eines benachbarten Bauteils dient. Durch die stufige Ausgestaltung des Klebemittelkanals 18" lässt sich die Einstecktiefe für den Stift 23' begrenzen. Es ist natürlich auch möglich, konische Abschnitte und gestufte Abschnitte in einem Klebeznittelkanal miteinander zu kombinieren. Neben dem Stift 23' können in den Klebemittelkanälen 18, 18', 18" Befestigungsmittel wie z.B. Schrauben aufgenommen werden. Zur Aufnahme des Stifts 23' bzw. von Befestigungsmitteln wird Klebemittel bevorzugt so zugeführt, dass die Klebemittelkanäle 18, 18', 18" frei von Klebemittel bleiben.

Die Klebemittelkammern 13' sind nach außen durch den gewölbten Wandabschnitt 8' begrenzt. An den Stirnseiten der länglichen Klebemittelkammern 13' sind Wandabschnitte 27' und 28' an dem Beschlag 10' ausgebildet, so dass die Klebemittelkammern 13' weitgehend abgedichtet sind. An dem äußeren Wandabschnitt 27' der Klebemittelkammer 13' kann dabei ein Sichtfenster ausgebildet sein, um beim Verkleben den Füllstand in der Klebemittelkammer 13' überprüfen zu können. Auch andere Mittel zur Erfassung des Füllstandes können an dem sichtbaren Wandabschnitt 27' vorgesehen sein.

An den Wänden 14' sind auf der zu den Deckplatten 2 bzw. 4 gewandten Seite Schlitze ausgebildet, um ein Entweichen von Luft beim Einspritzen von Klebemittel sowie eine gute Haftung zu ermöglichen.

**Bezugszeichenliste**

| | | | |
|---|---|---|---|
| 1 | Leichtbauplatte | 21' | Kurvenführung |
| 2 | Deckplatte | 22 | Kopf |
| 3 | Mittelschicht | 22' | Kopf |
| 4 | Deckplatte | 23' | Stift |
| 5 | Bohrung | 24' | Düse |
| 6 | Stirnseite | 25' | Spitze |
| 7 | Öffnung | 26 | Steg |
| 8 | Wandabschnitt | 27 | Wandabschnitt |
| 10 | Beschlag | 27' | Wandabschnitt |
| 10' | Beschlag | 28 | Wandabschnitt |
| 11 | Ringförmiger Abschnitt | 28' | Wandabschnitt |
| 11' | Ringförmiger Abschnitt | 30 | Beschlag |
| 12 | Vorsprung | 31 | Verlängerung |
| 12' | Vorsprung | 32 | Topfförmiges Gehäuse |
| 13 | Klebemittelkammer | 33 | Seitlicher Topf |
| 13' | Klebemittelkammer | 34 | Mittlerer Topf |
| 14 | Wand | 35 | Klebemittelkammer |
| 14' | Wand | 36 | Wandabschnitt |
| 15 | Hülse | 37 | Klebemittelkanal |
| 15' | Hülse | 38 | Blende |
| 16 | Rohr | 39 | Beschlagteil |
| 16' | Rohr | 40 | Beschlag |
| 17 | Beschlagsteil | 41 | Rohr |
| 17' | Stift | 43 | Gehäusetopf |
| 18 | Klebemittelkanal | 44 | Klebemittelkammer |
| 18' | Klebemittelkanal | 45 | Wandabschnitt |
| 18" | Klebemittelkanal | 47 | Klebemittelkammer |
| 19 | Blende | 48 | Blende |
| 19' | Blende | 50 | Steg |
| 20 | Drehscheibe | 60 | Greifer |
| 20' | Spannexzenter | 61 | Anschlüsse |
| 21 | Kurvenführung | 62 | Greiferbacke |
| 63 | Greiferbacke | 177 | Hohlkammer |
| 64 | Klebemitteldüse | 78 | Klebemittelkanal |
| 70 | Beschlag | 79 | Blende |
| 71 | Außenteil | 80 | Aufnahme |
| 72 | Mittelteil | 81 | Bohrung |
| 73 | Rohrabschnitt | 82 | Stirnseite |
| 74 | Klebemittelkammer | 85 | Vorsprung |
| 75 | Zwischenraum | | |
| 76 | Boden / Außenwand | | |

## Patentansprüche

1. Beschlag (10, 10', 30, 40, 70), insbesondere zur Montage in einer Leichtbauplatte (1), mit einem Gehäuse, an dem mindestens eine nach außen offene Klebemittelkammer (13, 13', 35, 44, 74) ausgebildet ist, die mit einem im Gehäuse verlaufenden Klebemittelkanal (18, 18', 18", 37, 47, 78) in Verbindung steht, der eine Einlassöffnung zum Anschluss an eine Einspritzdüse (64) für Klebemittel aufweist, **dadurch gekennzeichnet, dass** der Klebemittelkanal (18, 18', 18", 37, 47, 78) eine Blende (19, 19', 38, 48, 79) mit einem verringerten Querschnitt aufweist.

2. Beschlag nach Anspruch 1, **dadurch gekennzeichnet, dass** der Querschnitt der Blende (19, 19', 38, 48, 79) weniger als halb so groß ist wie der Querschnitt des Klebemittelkanals (18, 18', 18", 37, 47, 78).

3. Beschlag nach Anspruch 1 oder 2, **dadurch gekennzeichnet, dass** die Klebemittekammer (13, 13', 35, 44, 74) als länglicher Hohlraum ausgebildet ist und der Klebemittelkanal (18, 18', 18", 37, 47, 78) sich in Längsrichtung der Klebemittelkammer (13, 13', 35, 44) erstreckt.

4. Beschlag nach Anspruch 1 oder 2, **dadurch gekennzeichnet, dass** die Klebemittekammer als länglicher Hohlraum ausgebildet ist und sich parallel zur Stirnseite (6) der Leichtbauplatte (1) erstreckt.

5. Beschlag nach einem der Ansprüche 1 bis 4, **dadurch gekennzeichnet, dass** der Klebemittelkanal (18, 37, 47, 78) einen Durchmesser zwischen 2 bis 4 mm, insbesondere 2,5 bis 3,5 mm aufweist und/oder die Blende (19, 19', 38, 48, 79) einen Durchmesser zwischen 0,8 bis 2,3 mm, insbesondere 1,2 bis 1,8 mm aufweist.

6. Beschlag nach einem der Ansprüche 1 bis 5, **dadurch gekennzeichnet, dass** die Klebemittelkammer (13, 13', 35, 44, 74) ein Volumen von mindestens 1 cm³, vorzugsweise mindestens 1,5 cm³ aufweist.

7. Beschlag nach einem der Ansprüche 1 bis 6, **dadurch gekennzeichnet, dass** an dem Beschlag (10, 10', 30, 40, 70) zwei beabstandete Klebemittelkanäle (18, 18', 18", 37, 47, 78) ausgebildet sind.

8. Beschlag nach einem der Ansprüche 1 bis 7, **dadurch gekennzeichnet, dass** an einer Außenwand (76) des Beschlages Mittel zur Erfassung eines Füllstandes der Klebemittelkammer (74) vorgesehen sind.

9. Beschlag nach einem der Ansprüche 1 bis 8, **dadurch gekennzeichnet, dass** auf die Beschlagsoberfläche ein Haftvermittler für das jeweilige Klebemittel aufgebracht ist.

10. Beschlag nach einem der Ansprüche 1 bis 9, **dadurch gekennzeichnet, dass** die Beschlagsoberfläche, insbesondere im Bereich der Klebemittelkammer (13, 13'), eine Struktur zur Oberflächenvergrößerung, vorzugsweise Profilierungen in Form von Rippen oder Rillen, aufweist.

11. Beschlag nach einem der Ansprüche 1 bis 10, **dadurch gekennzeichnet, dass** die Klebemittelkammern durch Wandabschnitte in Unterkammern im Sinne einer Kaskade zur Fließverzögerung ausgestattet sind.

12. Beschlag nach einem der Ansprüche 1 bis 11, **dadurch gekennzeichnet, dass** die Klebemittelkanäle (18', 18") gestuft oder konisch ausgeführt sind.

13. Beschlag nach einem der Ansprüche 1 bis 12, **dadurch gekennzeichnet, dass** das zwischen Blende (19, 19', 38, 48, 79) und Klebemittelkammer eine Zwischenkammer mit gegenüber dem Klebemittelkanal vergrößertem Querschnitt, insbesondere zur Wärmespeicherung, angeordnet ist.

14. Leichtbauplatte, mit zwei äußeren Deckplatten (2, 4) und einer Mittelschicht (3), **dadurch gekennzeichnet, dass** an einer Stirnseite mindestens ein Beschlag (10, 30, 40, 70) nach einem der vorhergehenden Ansprüche verklebt ist.

15. Leichtbauplatte nach Anspruch 14, **dadurch gekennzeichnet, dass** der Beschlag (10, 30, 40, 70) so in der Leichtbauplatte (1) angeordnet ist, dass die Wände (14, 27, 28, 36, 45) der Klebemittelkammer (13, 35, 44, 74) in einem Abstand von nicht mehr als 0,6 mm, insbesondere weniger als 0,4 mm oder 0,2 mm, an der Deckplatte (2, 4) der Leichtbauplatte (1) angeordnet sind.

## Claims

1. A fitting (10, 10', 30, 40, 70), in particular for installation in a light construction plate (1), having a housing, on which at least one adhesive chamber (13, 13', 35, 44, 74), which is open to the outside, is formed, this chamber being connected to an adhesive channel (18, 18', 18", 37, 47, 78), which extends in the housing, and which has an inlet opening for connection to an injection nozzle (64) for adhesive, **characterized in that** the adhesive channel (18, 18', 18", 37, 47, 78) has a screen (19, 19', 38, 48, 79) having a reduced cross section.

2. The fitting according to Claim 1, **characterized in that** the cross section of the screen (19, 19', 38, 48, 79) is less than half as large as the cross section of the adhesive channel (18, 18', 18", 37, 47, 78).

3. The fitting according to Claim 1 or 2, **characterized in that** the adhesive chamber (13, 13', 35, 44, 74) is formed as an oblong cavity and the adhesive channel (18, 18', 18", 37, 47, 78) extends in the longitudinal direction of the adhesive chamber (13, 13', 35, 44).

4. The fitting according to Claim 1 or 2, **characterized in that** the adhesive chamber is formed as an oblong cavity and extends in parallel to the end face (6) of the light construction plate (1).

5. The fitting according to any one of Claims 1 to 4, **characterized in that** the adhesive channel (18, 37, 47, 78) has a diameter between 2 and 4 mm, in particular 2.5 to 3.5 mm, and/or the aperture (19, 19', 38, 48, 79) has a diameter between 0.8 and 2.3 mm, in particular 1.2 to 1.8 mm.

6. The fitting according to any one of Claims 1 to 5, **characterized in that** the adhesive chamber (13, 13', 35, 44, 74) has a volume of at least 1 cm³, preferably at least 1.5 cm³.

7. The fitting according to any one of Claims 1 to 6, **characterized in that** two spaced-apart adhesive channels (18, 18', 18", 37, 47, 78) are formed on the fitting (10, 10', 30, 40, 70).

8. The fitting according to any one of Claims 1 to 7, **characterized in that** means for acquiring a fill level of the adhesive chamber (74) are provided on an outer wall (76) of the fitting.

9. The fitting according to any one of Claims 1 to 8, **characterized in that** an adhesion promoter for the respective adhesive is applied to the fitting surface.

10. The fitting according to any one of Claims 1 to 9, **characterized in that** the fitting surface, in particular in the region of the adhesive chamber (13, 13'), has a structure for surface enlargement, preferably profiles in the form of ribs or grooves.

11. The fitting according to any one of Claims 1 to 10, **characterized in that** the adhesive chambers are equipped with wall sections to form subchambers in the meaning of a cascade for delaying flow.

12. The fitting according to any one of Claims 1 to 11, **characterized in that** the adhesive channels (18', 18") are embodied as stepped or conical.

13. The fitting according to any one of Claims 1 to 12, **characterized in that** an intermediate space having cross section enlarged in relation to the adhesive channel, in particular for heat storage, is arranged between aperture (19, 19', 38, 48, 79) and adhesive chamber.

14. A light construction plate having two outer cover plates (2, 4) and a middle layer (3), **characterized in that** at least one fitting (10, 30, 40, 70) according to any one of the preceding claims is glued to an end face.

15. The light construction plate according to Claim 14, **characterized in that** the fitting (10, 30, 40, 70) is arranged in the light construction plate (1) so that the walls (14, 27, 28, 36, 45) of the adhesive chamber (13, 35, 44, 74) are arranged at a spacing of not greater than 0.6 mm, in particular less than 0.4 mm or 0.2 mm, on the cover plate (2, 4) of the light construction plate (1).

## Revendications

1. Ferrure (10, 10', 30, 40, 70), destinée en particulier à être montée sur un panneau léger préfabriqué (1), avec un corps sur lequel est formé au moins un compartiment à adhésif (13, 13', 35, 44, 74) ouvert vers l'extérieur, communiquant avec un canal à adhésif (18, 18', 18", 37, 47, 78) passant dans le corps, qui présente une ouverture d'entrée destinée à se raccorder à une buse d'injection (64) à adhésif, **caractérisée en ce que** le canal à adhésif (18, 18', 18", 37, 47, 78) présente un diaphragme (19, 19', 38, 48, 79) qui a une section réduite.

2. Ferrure selon la revendication 1, **caractérisée en ce que** la section du diaphragme (19, 19', 38, 48, 79) est au moins deux fois plus petite que la section du canal à adhésif (18, 18', 18", 37, 47, 78).

3. Ferrure selon la revendication 1 ou 2, **caractérisée en ce que** le compartiment à adhésif (13, 13', 35, 44, 74) est conformé comme une cavité allongée et le canal à adhésif (18, 18', 18", 37, 47, 78) s'étend dans le sens de la longueur du compartiment à adhésif (13, 13', 35, 44).

4. Ferrure selon la revendication 1 ou 2, **caractérisée en ce que** le compartiment à adhésif est conformé comme une cavité allongée et s'étend parallèlement à la face frontale (6) du panneau léger préfabriqué (1).

5. Ferrure selon l'une des revendications 1 à 4, **caractérisée en ce que** le canal à adhésif (18, 37, 47, 78) a un diamètre compris entre 2 et 4 mm, en particulier entre 2,5 et 3,5 mm et/ou le diaphragme (19, 19', 38, 48, 79) a un diamètre compris entre 0,8 et 2,3 mm, en particulier entre 1,2 et 1,8 mm.

6. Ferrure selon l'une des revendications 1 à 5, **caractérisée en ce que** le compartiment à adhésif (13, 13', 35, 44, 74) a un volume d'au moins 1 cm³, de préférence au moins 1,5 cm³.

7. Ferrure selon l'une des revendications 1 à 6, **caractérisée en ce que** deux canaux à adhésif (18, 18', 18", 37, 47, 78) distants l'un de l'autre sont formés sur la ferrure (10, 10',

8. Ferrure selon l'une des revendications 1 à 7, **caractérisée en ce que** des moyens pour détecter un niveau de remplissage du compartiment à adhésif (74) sont prévus sur une paroi extérieure (76) de la ferrure.

9. Ferrure selon l'une des revendications 1 à 8, **caractérisée en ce qu'**un activateur d'adhérence pour l'adhésif utilisé est appliqué sur la surface de la ferrure.

10. Ferrure selon l'une des revendications 1 à 9, **caractérisée en ce que** la surface de la ferrure présente, en particulier au niveau du compartiment à adhésif (13, 13'), une structure qui augmente la surface, par exemple des profilés prenant la forme de nervures ou de rainures.

11. Ferrure selon l'une des revendications 1 à 10, **caractérisée en ce que** les compartiments à adhésif sont munis de sections de paroi dans des sous-compartiments formant une cascade de freins à l'écoulement.

12. Ferrure selon l'une des revendications 1 à 11, **caractérisée en ce que** les canaux à adhésif (18', 18") ont une forme en gradins ou conique.

13. Ferrure selon l'une des revendications 1 à 12, **caractérisée en ce qu'**un compartiment intermédiaire ayant une section agrandie par rapport au canal à adhésif est formé entre le diaphragme (19, 19', 38, 48, 79) et le compartiment à adhésif, en particulier pour accumuler la chaleur.

14. Panneau léger préfabriqué avec deux plaques de couverture extérieures (2, 4) et une couche intermédiaire (3), **caractérisé en ce qu'**au moins une ferrure (10, 30, 40, 70) selon l'une des revendications principales est collée sur une face frontale.

15. Panneau léger préfabriqué selon la revendication 14, **caractérisé en ce que** la ferrure (10, 30, 40, 70) est disposée dans le panneau léger préfabriqué (1) de telle façon que les parois (14, 27, 28, 36, 45) du compartiment à adhésif (13, 35, 44, 74) soient disposées à une distance qui ne dépasse pas 0,6 mm, de préférence de moins de 0,4 mm ou de 0,2 mm, sur la plaque de couverture (2, 4) du panneau léger préfabriqué (1).
